# EUROPEAN PATENT APPLICATION

(11) **EP 1 433 970 A1**
(43) Date of publication of application: **30.06.2004**
(21) Application number: 02400059.8
(22) Date of filing: 27.12.2002
(51) Int. Cl.: F16D 3/76, F16D 3/74, F16D 3/72

(54) **Shaft coupling with flexible elements**

(71) Applicant: Kop-Flex, Inc., Baltimore, Maryland 21203 (US)
(72) Inventor: Zilberman, Jossef, Columbia, Maryland 21044 (US); Munyon, Robert E., Pasadena, Maryland 21122 (US); Meier, William R., Catonsville, Maryland 21228 (US)
(74) Representative: UEXKÜLL & STOLBERG

(57) **Abstract**

A coupling between a driving and a driven shaft (28,30) includes a rigid tube (32) to which are attached by bonding, in axially spaced apart relation at least two flexible annular elements of elastomeric material (16); the outer periphery of each ring is bonded to an attachment ring which is attachable to a flange (22) of a connecting hub (26) with each hub mounted or connected to one of the shafts; in one form the tube is split axially and is adjustably attachable to the periphery of the rings.

## Description

### Field of the Invention

The present invention relates to flexible coupling devices for shafts to permit and facilitate transmission of torque between a drive and a driven shaft while accommodating misalignment between the shafts. More particularly, the present invention relates to spool type flexible couplings, where the spool will permit a relatively large variation of the distance between the shafts to be coupled and a greater degree of accommodation of distance variation between the shafts. The flexible elements of the coupling will include outer rings usually of metal to allow secure attachment to hubs provided on each of the shafts to be coupled and a central connecting tubular piece between the flexible elements. Various types of elastomeric type flexible elements are disclosed with particular emphasis on optimal construction for maximum bond strength and durability.

### Background of the Invention

In the field of elastomer or plastic flexible elements couplings, a number of considerations affecting the design of a flexible coupling exist. Among these are the degree of misalignment tolerated, the anticipated torque loads and design constraints relating to the installation allowed. In some arrangements, only a limited type of elastomeric material could be employed in a coupling to accommodate the torque loads desired. In other arrangements, the cost of the coupling has been increased, as a result of the complicated design of the flexible elements of the coupling. The assembly means of the flexible elements to the other coupling components has been the typical deficiency of prior art couplings. This is an essential factor in the coupling design, affecting both cost and performance capabilities.

One such prior art coupling is shown in Fig. 2 of a French Patent No. 984,089 of July 2, 1951. The assembly method of the element, detailed in Fig. 1, shows a complicated arrangement of several typically heavy metal parts, which clamp the upper and lower extremities of the flexible element, to allow torque transmission. The main problem of clamping elastomer parts is that they do not generally retain their original shape under load and acquire a permanent set. This reduces the initial clamping force, and loss of torque capacity. The clamped areas at the upper and lower extremities of this element are also highly stressed and subject to failures in operation. The number of auxiliary parts is also increasing the fabrication cost.

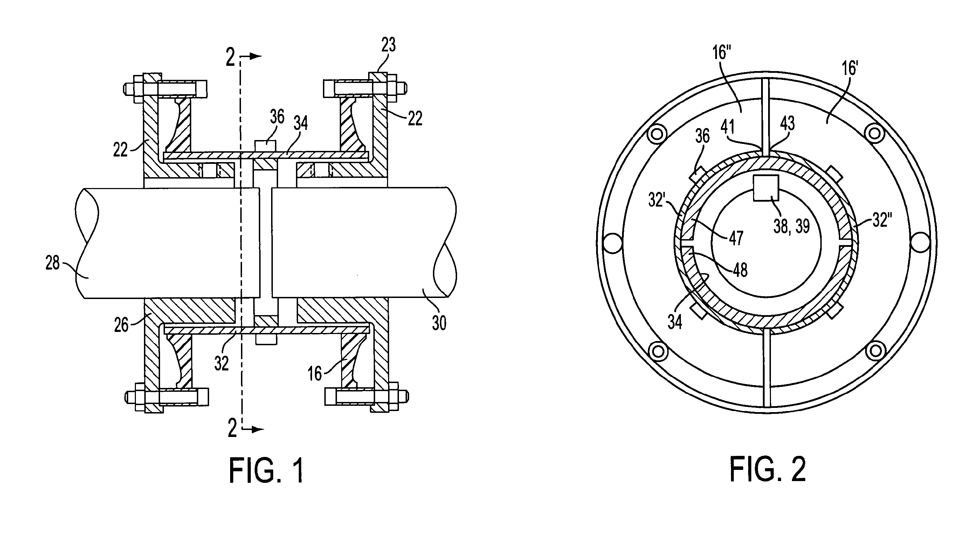

Another coupling construction and element assembly method is described in US Patent No. 4,411,634 to Hammelmann. The materials for the flexible elements, described as diaphragm-style in common coupling terminology, and the central spacer shaft are plastic. They are not described as having elastomer ic properties, but to a lesser extent, they exhibit similar properties in terms of stress-deformation set. The inner diaphragm connection is achieved by a press fit among several convoluted shaped parts. For this reason, the low material modulus requires a considerable thickness and weight for the center tube to allow a reasonable torque capacity and avoid compression set. Additional complications of the design are required, such as the steel sleeves pressed inside and outside the tube, as well as the convoluted steel reinforcement part mounted at the inside diameter of the diaphragm hub, fitted over the convoluted sleeve mounted over the shaft (Figures 1 and 2). The outside flexible element connection is achieved through bolting. The thicker rim of the element is provided with holes and is clamped between two metal members. The compression stresses developed when the fasteners are tightened have a negative effect on the performance of the coupling, acting as stress concentration areas, and failures are likely to occur in this upper extremity of the plastic flexible diaphragm member.

### Summary of the Invention

The present invention avoids the complications of the prior art devices yet provides a flexible coupling, which, in its basic form, accommodates a much broader range of distances between the shafts to be coupled, from relatively large to very close shafts separations, yet reliably transmits torque over a satisfactory range and through an increased degree of tolerance for misalignment.

In one form of the invention for close spaced shafts, the coupling spool is split longitudinally and reinforced during assembly by a rigid ring which may be bolted in place during installation. The rigid ring serves as reinforcement for the split spool. In addition, flexible elastomeric annular diaphragms are employed as the flexing members of the coupling and are also split and attached by bonding on the respective halves of the split spool and to the outer split attachment rings prior to installation in the coupling. This allows assembly and disassembly for closely spaced shafts, without moving the hubs installed on the shafts, or the two connected machines.

In another form, the present invention provides a permanently assembled coupling spool piece, consisting of two axially spaced elastomer flexible diaphragms, bonded at their inner periphery to a tubular piece, and also bonded at their outer periphery to a pair of similarly axially spaced rings, each such ring member having attachment bores for securing it to the respective flanges or hubs of the shafts to be coupled. The tube, rings and flexible elements thus form a unitary spacer assembly which is easy to install and remove.

In another form, the present invention provides a coupling spool on which are initially movably mounted two coupling sleeves at opposite ends thereof. Each coupling sleeve is provided with a flexible diaphragm in the form of an elastomeric element bonded to an outer ring preferably of metal, which can be coupled directly to a flange of a coupling hub, which in turn is mounted on a drive or a driven shaft. The flexible elements are spaced apart a distance that is typically more substantial than in the prior art arrangements. Minor manufacturing changes will enable the coupling of this form of the present invention to accommodate a broad range of distances between the shafts to be coupled. The coupling tube combinations will be such that these members can be readily assembled together by adhesive bonding, riveting or the like. As noted above, the flexible elements incorporated in the coupling are preferably made from a flexible elastomeric material that is shaped to accommodate the degree of flexibility needed for a particular application without experiencing stresses leading to failures in normal use. In one form, the flexible elements are formed with a curve so that the outer end of the elements will be axially spaced from the center of the base of the element. With the flexible element preferably manufactured in an annular shape, a taper is provided where the element narrows as one moves radially outwardly from the inner periphery of the element to adjacent the outer rim which is narrower in axial extent. The actual cross-sectional shape and taper are designed for the application requirements. The element may be manufactured using various common elastomer processing methods, such as compression, gravity casting or injection molding.

In terms of the flexible element / adjacent parts attachment method used in the present invention, bonding has been chosen for it's simplicity and absence of auxiliary parts. The reliability of elastomer adhesives has evolved over the years, the modern ones exhibiting a much higher strength than in the past. Lord Chemical Corporation is one of the manufacturers of such adhesives.

With the flexible couplings of the present invention, a user a will be able to transmit high torque loads while accommodating high degrees of misalignment. Further, the coupling is characterized by ease of installation in either narrow or extended spaces between the shafts and by a low number of individual parts for assembly. With even widely spaced apart shafts, the flexible coupling of this invention will provide high-speed capability due to the high radial rigidity of the flexible elements.

The foregoing and other advantages will become apparent as consideration is given to the following detailed description taken in conjunction with the accompanying drawings, in which:

### Brief Description of the Drawings

Figure 1 is a side view in elevation of one embodiment showing an arrangement of the elements of the present invention using a split spool;
Figure 2 is a view along lines 2-2 of Figure 1;
Figure 3 is a side view in elevation of an alternate arrangement of the elements of the present invention;
Figure 4 is a side view in elevation of a further arrangement of the elements of the present invention;
Figure 5 is a perspective view in section of a further embodiment of the present invention;
Figure 6A is a side view in elevation of the coupling of the present invention; and
Figure 6B is a view similar to Figure 6A but with the telescoping feature shown in a different condition.
Figures 7-9 are respective side views in elevation, partly in section, of several further forms of the invention;
Figures 10 is a detailed view in elevation of the curved flexible ring of Figure 9; and
Figure 11 is a side view in elevation of an alternate arrangement of the elements of the present invention.

### Detailed Description of the Invention

Referring to the drawings, in Figures 1 and 2, there is shown an embodiment of the present invention which is adapted for close-coupled shafts, that is, shafts the ends of which are in close proximity to one another and which cannot be moved away from each other than at an unacceptable cost. In this arrangement, the spool is in the form of a split tube 32 which is reinforced by an inner ring 34 and which is held in place typically by four bolts such as at 36, which are evenly spaced about the periphery of the split tube 32. The ring 34 is preferably located at the midpoint of the tube 32 as shown in Figure 1. The ring 34 may be integral or provided in two halves, with two bolts provided to retain each half of the ring 34 in place against the inner surface but bridging over the edges as at 41, 43 of the tube halves which it is reinforcing. As shown in the sectional view of Figure 2, the tube 32 is split longitudinally along its entire length to provide two semi cylindrical bodies 32' and 32". Similarly, the flexible elastomeric rings 16 may each be split into two parts 16' and 16". The radially inner peripheral edges of the ring parts 16' and 16" will each be easily secured by a suitable, commercially available adhesive to the radially outer peripheral surface of the split tubes 32' and 32". According to this embodiment, the diameter of the split tube 32 is made large enough to accommodate the hubs 26 as shown in Figure 1. This will allow a substantially more compact configuration for the elements when achieving coupling between two closely located shaft ends 28 and 30 and yet will provide a coupling with adequate flexibility and tolerance for axial misalignment. The radially extending flanges 22 of hubs 26 are continuous to provide adequate torque transfer through the split rings 16' and 16". The axial extent of the hubs 26 allows it to be easily secured as by welding to the outer surfaces of their respective shafts 28 and 30. Since the spool is provided in two parts 32' and 32", the coupling will be easily reassembled whenever it is necessary to repair or replace elements such as the flexible rings 16' and 16".

The assembly of the elements of the coupling of Figure 1 and 2 is important to obtain the full benefit of the invention. To avoid distortions of the split elements under torque, the presence of the reinforcing ring is mandatory. In the case of a split ring it is preferable to offset the split edges 41,43 of the spool halves 32' and 32" by ninety degrees to the edges 47, 48 of the split ring 34 as shown in Figure 2, so that the rigidity of the assembly is not affected.

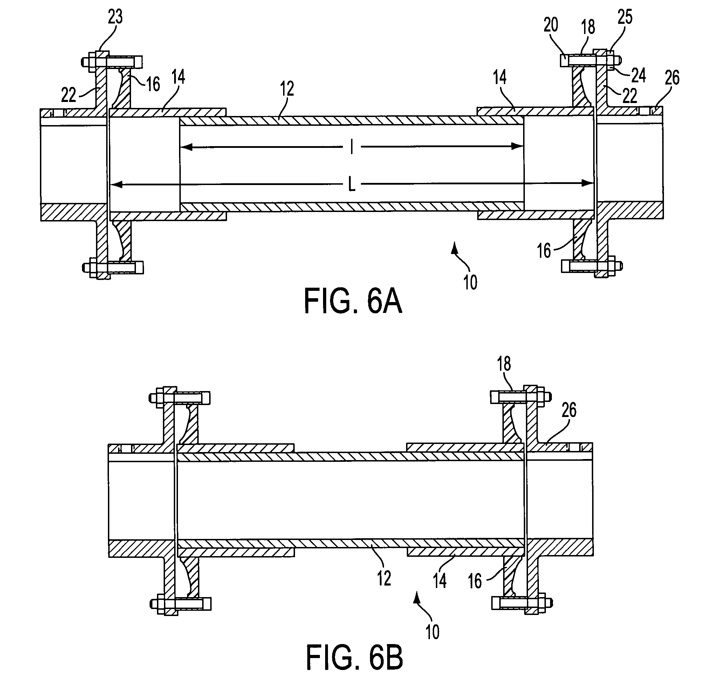

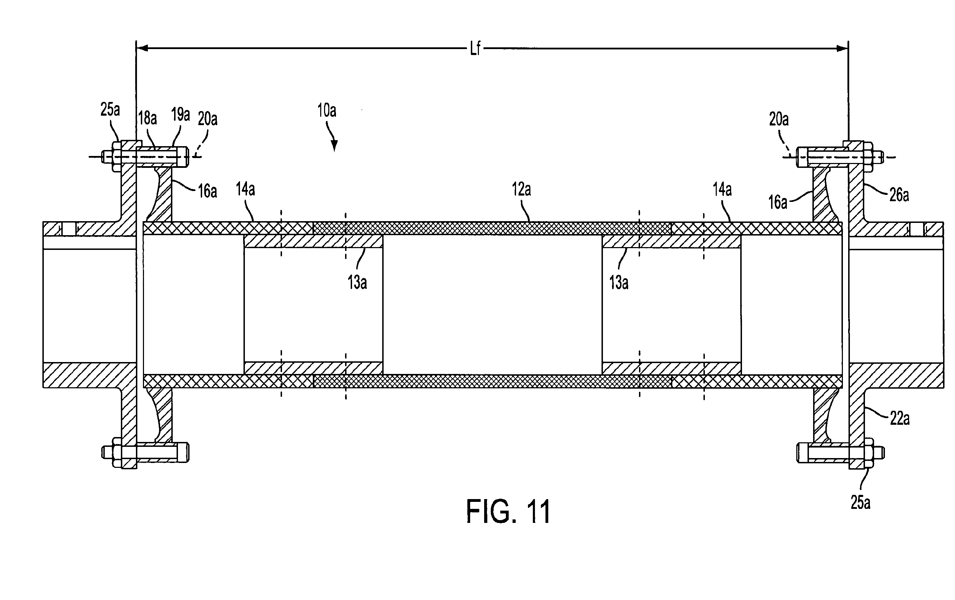

In Figures 6A, 6B, and 11, illustrate invention forms designed for extra-long or adjustable length spools for wide shaft spacing. The telescoping form of the inventions 10, 10a are shown, where a spool 12 and 12a is interposed between two relatively larger diameter sleeves 14. Each of the sleeves 14 and 14a is identically configured so that a description of only the right hand sleeve will be provided.

The sleeves 14 and 14a and spool 12 and 12a are preferably made of a material such as steel or fiberglass that is easily bonded together with a conventional adhesive such as an epoxy or connected mechanically such as by rivets. Additionally, annular ring members 16 and 16a are readily bonded about their respective inner openings to the outer peripheral surface of each sleeve 14 and 14a as shown with conventionally available adhesives such as epoxies. The flexible element member 16, 16a is bonded at its outer periphery to the inner surface of a ring member 19, 19a which has equally spaced about its body bores 18,18a in which locking bolts 20 are located. A connection hub 26, 26a is provided with an annular flange 22, 22a, which is provided with openings for receiving the bolts 20, 20a. Locking nuts 25 are employed to effect the attachment of the coupling flange 26, 26a to the flexible element member's 16, 16a as shown in these Figures.

The flexible coupling 10 as described above is particularly adapted to accommodate spaced apart annular flexible rings 16, 16a for a range of distances "I" to "L" between the coupling flanges 22. In Figure 11, the corresponding elements are denoted with the suffix "a" with the general designation 10a corresponding to the tube or spool 10 in Figures 6a and 6b. In this construction, the intermediate sleeves are inserted into the open ends of each sleeve 14a and preferably bonded to intermediate connecting bushings 13a by an adhesive although riveting or bolting may suffice in some applications. Thus, by simply selecting spools 12 and 12a of a desired length, a user can accommodate a broad range of coupling distances between shafts.

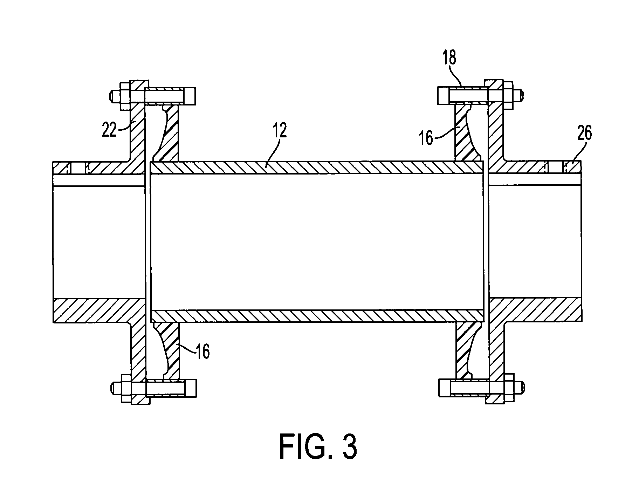

As will be apparent from Figure 3, where a telescoping facility is not used, the spool 12 may be employed alone as shown in Figure 3 to provide a flexible coupling employing spaced apart flexible, elastomeric rings 16 which are securely bonded to the outer periphery of the spool 12 adjacent the ends of the spool 12. This form of the invention is used for fixed lengths, such as 3, 5 and 7 inches, typical for industry-established standards. The use of a suitable elastomeric material such as polyurethane elastomer for the diaphragm elements 16 makes it particularly easy to install. In this and the other forms using a hub flange 22, an outer lip 23 may be provided to stabilize the parts during assembly as well as use.

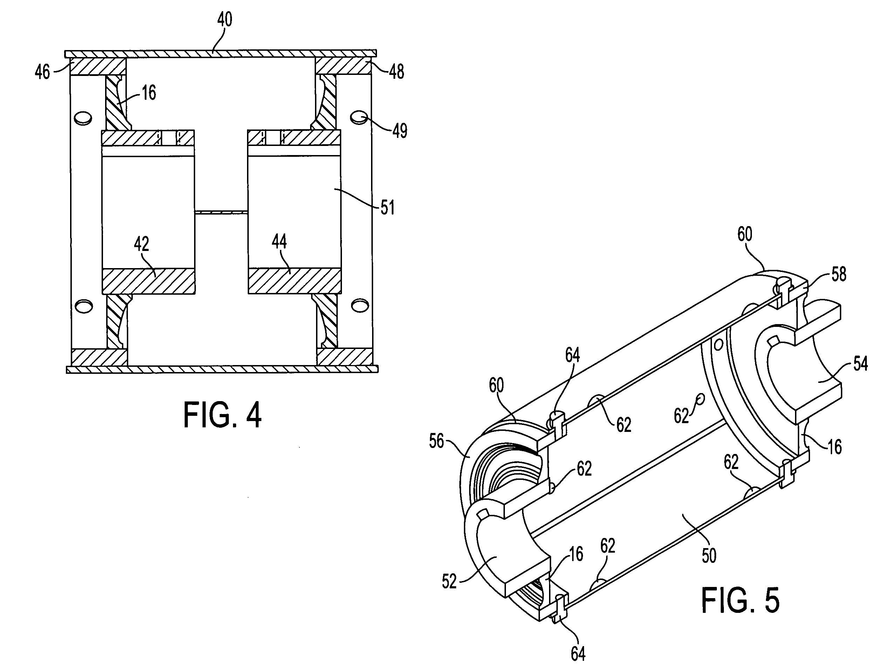

A modification of the coupling of Figure 1 is shown in Figure 4 where a spool member 40 surrounds the coupling elements including two hubs or sleeves 42 and 44. The flexible, elastomeric ring members 16 are bonded at their interior periphery directly to the outer periphery of each of the hub members 42 and 44. The outer periphery of each of the members 16 are similarly bonded to the inner periphery of the reinforcing rings 46 and 48. The spool 40 may be either bonded or riveted as through holes 50 to the outer periphery surface of the rings 46 and 48. The shafts to be coupled will be inserted into the interior of a hub 42 to an extent to allow the second shaft to be inserted as through end 51 into hub 44. The shafts will then be fixed to their respective hubs 42, 44 by welding, bolting, riveting, or the like. The spool 40 may be split parallel to its longitudinal axis to facilitate installation where the shafts are too closely placed together at the site to allow easy installation.

Referring to Figure 5, there is shown a perspective, sectional view of a further modification of the invention where a split spool 50 is employed in a configuration similar to that of Figure 4 but with the hubs projecting externally of the ends of the spool 50. Again, the elastomeric elements 16 are bonded to the inner periphery of reinforcing rings 56,58 and to the outer periphery of the shaft mounting hubs 52 and 54. Again, the use of a split spool facilitates installation without sacrificing the integrity of the coupling or its torque transmission ability. In addition, the rings 56,58 may be positioned at positions located axially inwardly of the outer edges 60 of the spool 50 sections by the provision of alternate fastener bores 62 located, as shown, inwardly of the edges and the outermost holes in which the screws, two of which are indicated at 64, are positioned. A plurality of sets of bores 62 may be provided to expand the range of adjustability.

The use of spaced apart flexible rings as described in the foregoing embodiments increases the misalignment tolerated by the couplings while allowing significant latitude in installation. Moreover, the couplings described above will provide high torque transmission while retaining the advantages of lightweight installations.

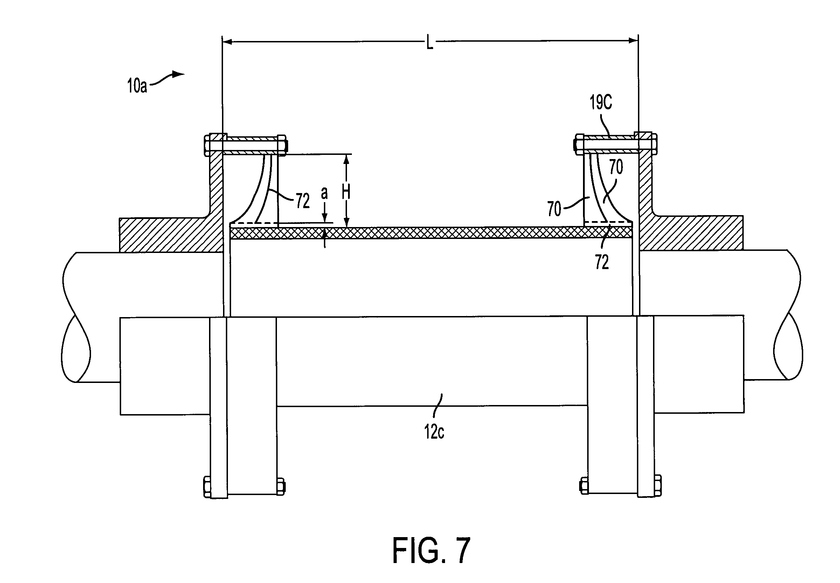

With respect to the embodiments shown in Figures 7-10, these forms use a modified flexible ring element, which is characterized by the provision of an extended base or pedestal and/or a curvature along the radial extent of the ring element.

In Figure 7, there is shown a coupling similar to that shown in Figure 3 but one where the flexible elements 70 are shaped to include a larger surface area for the base 72 to improve the bonding strength and durability for the elements 70 to the surface of the spool 12c.

This form of the invention is based on the construction of the spacer coupling component in Fig 7 and presented in its most general form: a single piece assembly comprising five permanently assembled parts: two outer rings 19c, which may be metal, two axially spaced, annular elastomer flexible elements70 and one central tubular piece 12c. The assembly is affected by bonding the peripheral areas at the inside and outside interfaces of the flexible elements 70 with the tube 12c and rings19c, respectively. The rings and the tube are significantly more rigid than the elastomer flex elements material, which is preferably a polyurethane formulation and which features better properties for torque transmission than other elastomer classes. The tube 12c can be made of metal and composite materials such as fiberglass can also be used. The interface bond is formed by using one of many commercially available adhesives, formulated specifically for the attachment of urethane to metal or fiberglass parts. Their strength, resistance to temperature and chemical agents is constantly improving.

Referring again to Fig. 7, it will be appreciated that each of the elastomer elements 70, which are substantially annular shaped extend a radial distance H from the outer radius of the tube 12c to the inner radius of the ring 19c. Each element 70 comprises two main portions: a thicker and more rigid radially inner base 74, which provides bond reinforcement, of radial height "a" and a flexible portion profiled and tapered according to the application requirements, the profile having a neutral axis 72 (defined as the curve or line equally spaced from the two sides of the profile), its radial extent being "H-a". A large degree of flexibility for a given profile is associated with a high "(H-a)/H" ratio.

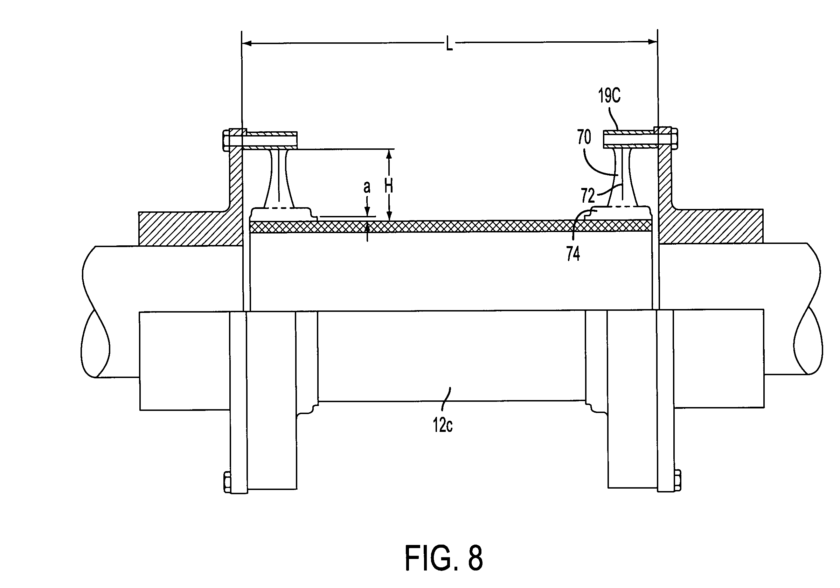

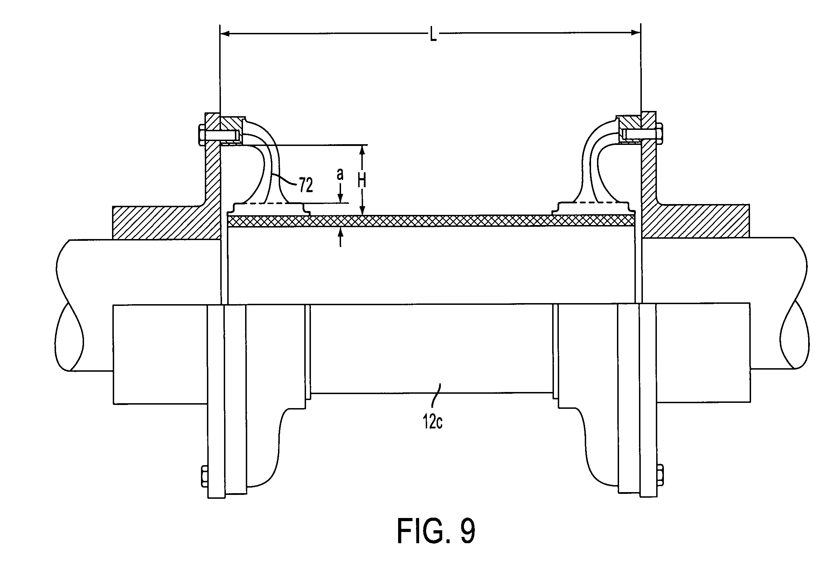

The base portion 74 is typically the thickest at the inner periphery, and the thinnest area of the profile "t" is generally situated towards the outer periphery. The height and thickness H and a may be theoretically and empirically determined relative to the torque load and rotational speed of the coupling. It has been found that, for the widest range of loads and rotational speeds, the flexible elements 70 should be curved at least on one side as shown in Figure 7 and preferably two sides as well as shown in Figure 8. The thickness of the base 74 portion may also be increased to control the flexibility of the elements 70 as shown in Figure 8 and the axial width may also be increased as shown in Figure 9. These modifications result in a stronger and therefore longer lasting bond between the base 74 of the flexible elements 70 and the supporting spool 12c.

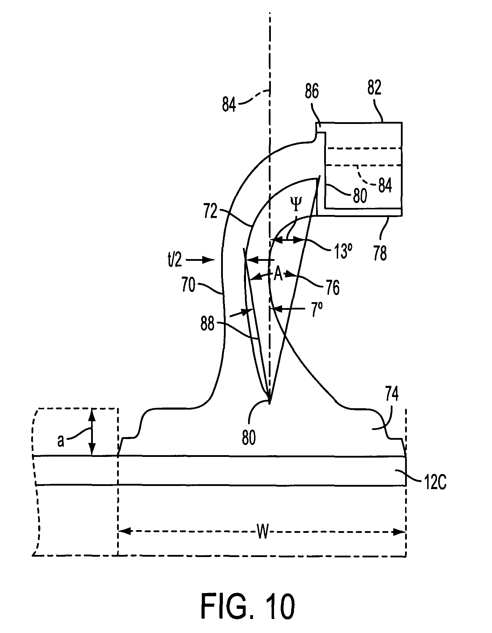

As shown in detail in Figure 10, the flexible coupling elements of this invention are preferably curved outwardly, that is, away from eachother, as shown in Figure 9. As noted above, each flexible element will have a neutral axis 72 and the range of curvature may vary depending on the specific application including torque load and rotational speed. As shown in Fig. 10, the curvature is formed by smoothly tangent arcuate portions, forming the curved shaped neutral axis, resembling an elongated letter "c". Additionally, the neutral axis 72, and the vertical axis 84, starting from the same inner base point 80, further intersect each other only once, towards the outer periphery of the element. It will be understood that a specific application may require greater or lesser amounts of curvature for the flexible elements 70.

A flexible portion profiled and tapered according to the application requirements will have a profile having its neutral axis 72 (defined as the curve or line equally spaced from the two faces or sides of the profile), its radial extent being "H-a" where the neutral axis curve is shaped as shown. This curvature results in a reduction in the bond stresses, typically highest at the joint between the bond reinforcement area 74 and tube 12 c.

The outer end of the element is preferably provided with a horizontal extension 78 and vertical face 80 defining a ledge in which the metal ring 82 is adhesively bonded. This structure facilitates assembly and imparts additional stability to the coupling. The ring 82 is provided with the conventional bores 84 for receiving bolts to attach the ring 82 to hubs 26. Preferably, the bores 84 are threaded and blind so as not to interfere with the adhesive bond or the material of the outer end of the flexible element 70 with the metal ring 82. Lip 86 is acting like a protective shroud, providing a coverage area against impact, mishandling, or ingress of chemicals in the bonded zone, which may affect its integrity. The bond stresses need to be minimized under torque loading, which are typically the highest at the center of the inner bond of the base portion 74 of the tube or spool 12c. For any given profile shape, the stresses on the bond can be reduced by being redistributed away from the critical center, and averaged over a wider portion. The addition of the bond reinforcement area achieves this purpose. Its width "w" of the base portion also contributes to the bond strength, but past a certain magnitude, it does not become proportionately effective. Thus, the bond strength and the degree of flexibility are related at least empirically. Where the torque load to be imposed on a coupling is low, the flexible elements 70 may have an enhanced degree of flexibility but where the torque load is relatively higher, only moderate flexibility can be had.

The preferred ratios for the conditions noted above are "H/a" ratio in the range of 4 to 16 and with the "w/t" ratio in the range of 2 to 4 for a high degree to flexibility where "t" is the thickness of flexible element at is narrowest part as shown in Figs. 10a and 10b. For more moderate flexibility "H/a" should be in the range of 4 to 8 with the ratio w/t in the range of 4 to 8 also.

The shape of the flexible element, and the general orientation of the neutral axis are additional means of reducing the bond stresses. For example, the two forms of the invention shown in figures 7 and 8, designed for lower torque and higher flexibility, exhibit higher bond stresses than the invention in Figures 9 and 10, described above. For example, the flexible element shown in Figure 7 has one flat side and a curved side, for ease of manufacturing through gravity molding. The neutral axis is slightly curved but slanted at the top towards the center of the spool. Additionally, as opposed to the invention in Figure 10, the neutral axis and the vertical centerline starting from a common point close to the inner periphery, do not have another point of intersection towards the outer periphery. The element in Figure 8 has both sides symmetrically profiled, hence the neutral axis and the vertical centerline coincide. The bond stresses are better averaged than in the case of Figure 7, but the direct vertical path of torque leads to higher bond stresses than in the case of the "c" shaped neutral axis element.

Having described the inventions, it will be understood that various modifications are possible without departing from the spirit and scope of the invention as defined in the appended claims.

## Claims

1. A coupling apparatus for connecting two shafts for rotational transmission of torque between the shafts, comprising a spool having an axis and having opposite, axially spaced ends and an exterior surface , a pair of flexible, annular elements each mounted on said spool in axially spaced apart relation adjacent a respective said end, at least one of said annular elements having an radially inner base having an inner peripheral surface adhesively bonded to said exterior surface of said spool, said at least one of said annular elements extending from said base thereof along a substantially arcuate path to a radially outer periphery, said outer periphery being attached to a ring member which surrounds the axis of said spool, said at least one of said annular elements being made of an elastomeric material.

2. The invention as claimed in claim 1 wherein said outer periphery is adhesively bonded to said ring member.

3. The invention as claimed in claim 1 wherein both of said annular elements have bases having radially inner respective peripheral surfaces each of which is adhesively bonded to said surface of said spool.

4. The invention as claimed in claim 1 wherein both of said annular elements include outer peripheries each of which is adhesively bonded to a ring member which surrounds the axis of said spool.

5. The invention as claimed in claim 1 wherein each of said annular elements are made of an elastomeric material.

6. The invention as claimed in claim 5 wherein said elastomeric material is polyurethane.

7. The invention as claimed in claim 1 wherein at least one of the shafts includes a hub mounted on said one shaft and said hub having a radially extending flange, said ring member being connectable to the flange.

8. The invention as claimed in claim 1 wherein said base of said at least one annular element has a greater axial dimension than the remaining portion of said annular element.

9. The invention as claimed in claim 8 wherein each of said annular elements has a base that has a greater axial dimension than the remaining portion of said respective annular element.

10. The invention as claimed in claim 9 wherein each said annular element has a body portion extending from said respective base to said respective outer periphery, said body tapering from said base to a position intermediate said base and said outer periphery where the axial dimension is reduced and said body increasing gradually in axial width from said position to said outer periphery.

11. The invention as claimed in claim 1 wherein said at least one of said annular elements has a body having opposite faces and a central axis spaced equidistantly from said opposite faces, said axis extending through said body from a point on said base to said outer periphery to an end point wherein an angle defined by a line extending from the point to the end point and a line extending radially of said spool axis and passing through the point on the base is between 3° to about 20°.

12. The invention as claimed in claim 11 wherein said angle is 13°.

13. The invention as claimed in claim 1 wherein both of said annular elements have a body having opposite faces and a central axis spaced equidistantly from said opposite faces, said axis extending through said body from a point on said base to said outer periphery to an end point wherein an angle defined by a line extending from the point to the end point and a line extending radially of said spool axis and passing through the point on the base is between 3° to about 20°.

14. The invention as claimed in claim 11 wherein said angle is 13°.

15. A coupling apparatus for connecting two shafts for rotational transmission of torque between the shafts, comprising a spool, a pair of flexible annular elements each mounted directly on said spool in axially spaced apart relation, a pair of hubs with one of said pair of hubs being attachable to one shaft and the other of said pair of hubs being attachable to the other of said shafts, each hub having a flange portion and at least two connecting members on each flange portion for connecting the respective flange to one of said annular elements, said annular elements each being made from an elastomer material, wherein each said annular element has an inner peripheral edge, each said inner peripheral edge being mounted on and adhesively bonded to the exterior surface of a hub element.

16. The coupling apparatus of claim 15 wherein said spool extends between said hubs.

17. The coupling apparatus of claim 15 wherein said spool is located radially outwardly of said flexible rings and hubs.

18. A coupling apparatus for connecting two shafts for rotational transmission of torque between the shafts, comprising a spool, a pair of hubs each for mounting on one of the shafts, each hub having an outer peripheral surface and a flexible ring mounted on said outer peripheral surface, each flexible ring having an outer peripheral edge connected to a reinforcing ring, said spool having opposite ends, each said end being connected to a said reinforcing ring.

19. The coupling apparatus of claim 18 wherein each end of said spool has one row of circumferentially spaced apertures to allow connection to a said reinforcing ring.

20. The coupling apparatus of claim 19 wherein at least one end of said spool has a plurality of circumferentially extending rows of apertures with said rows of apertures being spaced apart axially to accommodate variations in the distance between the shafts to be connected.

21. The coupling apparatus of claim 18 wherein said flexible rings are made of an elastomer material.

22. The coupling apparatus of claim 18 wherein each said flexible ring has a cross section that tapers non-linearly from a selected thickness on its radially inner portion to its radially outer portion.

23. The coupling apparatus of claim 1 wherein said spool includes a telescoping portion.

24. The coupling apparatus of claim 23 wherein said spool and said telescoping portion are rigidly attached together.

25. The coupling apparatus of claim 22 wherein each said flexible rings has an axis extending from said base thereof along a substantially arcuate path to a radially outer periphery.

26. A coupling apparatus for connecting two shafts for rotational transmission of torque between the shafts, comprising a spool having a cylindrical surface and is free of any flanges, a pair of flexible rings each having an inner surface mounted directly on said cylindrical surface of said spool in axially spaced apart relation, a pair of hubs with one of said pair of hubs being attachable to one shaft and the other of said pair of hubs being attachable to the other of said shafts, each hub having a flange portion and at least two connecting members on each flange portion for connecting the respective flange to one of said flexible rings, said flexible rings each being made from an elastomer material, each said flexible ring extending from said base thereof along a substantially arcuate path to a radially outer periphery.
